(19) **Europäisches Patentamt**

**European Patent Office**

**Office européen des brevets**

(11) **EP 1 088 804 A2**

(12) **EUROPEAN PATENT APPLICATION**

(43) Date of publication:
**04.04.2001 Bulletin 2001/14**

(51) Int. Cl.[7]: **C04B 41/85**

(21) Application number: **00121099.6**

(22) Date of filing: **28.09.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **30.09.1999 JP 28021199**<br><br>(71) Applicant: **NGK INSULATORS, LTD.**<br>**Nagoya-City, Aichi Prefecture 467-8530 (JP)** | (72) Inventors:<br>• **Hanzawa, Shigeru,**<br>**c/o NGK Insulators, Ltd.**<br>**Nagoya-city, Aichi-prefecture, 467-8530 (JP)**<br>• **Nakano, Kenji,**<br>**c/o NGK Insulators, Ltd.**<br>**Nagoya-city, Aichi-prefecture, 467-8530 (JP)**<br><br>(74) Representative:<br>**Leson, Thomas Johannes Alois, Dipl.-Ing. et al**<br>**Patentanwälte**<br>**Tiedtke-Bühling-Kinne & Partner,**<br>**Bavariaring 4**<br>**80336 München (DE)** |

(54) **Carbonaceous materials having an oxidation-resistant protective layer and method for producing the same**

(57) A new carbonaceous material having excellent properties such as a high anti-thermal shock resistance at a high temperature, high reliability and high environmental resistance in addition to lightness for energy saving and easiness of handling, being substantially not oxidized at 800°C or higher in a low-oxygen atmosphere; said carbonaceous material having the oxidation-resistant protective layer composed of silicon carbide and metallic silicon, which remains substantially unoxidized at 800°C or higher in a low-oxygen atmosphere; and obtainable by winding carbon paper around the carbonaceous material, impregnating the resultant with a slurry of metallic silicon and a phenolic resin, firing the resultant at 1000°C or lower in an inert atmosphere to carbonize the phenolic resin, and then heating the resultant at 1420 to 2200°C in the same atmosphere, to react substantially all of metallic silicon with the carbon in the above temperature range.

FIG.1

**Description**

Background of the Invention and Related Art Statement

This invention relates to a carbonaceous material having an oxidation-resistant protective layer, which remains substantially unoxidized at a high temperature of 800°C or higher in a low-oxygen atmosphere, to a method for producing the same, and also to application of the composite material.

In the midst of rapid technological developments, materials which remain substantially unoxidized at a high temperature of 800°C or higher, preferably 1000°C or higher, in a low-oxygen atmosphere, i.e., an atmosphere containing oxygen at 5% or less, have been strongly demanded for various areas, e.g., production of furnace members, ceramic condenser setters, and protective glass for plasma TV sets, known as large-size displays to be hung on the walls. It is needless to say that the materials for these purposes should have various excellent properties, e.g., high strength at a high temperature (high thermal shock resistance), high reliability as a material (e.g., toughness, and resistance to impact and wear), environmental resistance (e.g., resistance to corrosion, oxidation and radiation), as well as lightness for energy saving and easiness of handling.

Ceramics, e.g., silicon nitride and silicon carbide, which are heat-resistant, high strength materials, have been used in some of these areas. However, they have inherent disadvantages of fragility, are susceptible to damages in the presence of small scratches, and have insufficient resistance to thermal and mechanical shocks.

Ceramic-based composite materials (CMCs), in which continuous, ceramic-based fibers are composited, have been developed to overcome these disadvantages involved in ceramic materials, and already applied in some areas. As such an attempt, ceramic-based composite materials (CMCs) in which fibers are compositted in ceramic matrices, have been prepared by forming fiber bundles (yarns) typically consisting of several hundreds to thousands of long, ceramic fibers, about 10 µm in diameter, and arranging them in a two- or three-dimensional direction to form unidirectional sheets (UD sheets) or various types of cloths, or by laminating these sheets or cloths to form preforms (fiber preforms) of a given shape and forming matrices within the preforms for example by chemical vapor impregnation (CVI) or inorganic polymer impregnation, or filling the preforms with powdered ceramic by casting and sintering them to form the matrices.

These CMCs include C/C composites with a carbonaceous matrix between carbon fibers arranged in a two- or three-dimensional direction; and Si-SiC composites reinforced with SiC fibers, which is produced by impregnating a formed body containing SiC fibers and SiC particles with Si. The Si-SiC composite reinforced with SiC fibers has high resistance to, oxidation, creep and spalling or the like, but is lower in toughness than the C/C composite and hence in resistance to shock because of insufficient lubricity of the SiC fibers with Si-SiC or the like, and hence small withdrawing effect between the base material and fibers. Its another disadvantage comes from the carbon fibers used partly therein, which will be easily burnt in the presence of oxygen.

The inventors of the present invention have proposed a carbonaceous material, selected from the group consisting of C/C composite, Si-SiC-based composite and SiC-based composite, having an oxidation-resistant protective layer in its surface which remains substantially unoxidized in air at 800°C or higher, where at least one layer of the protective layer contains boron on which glass or ceramic material is further formed (Japanese Patent Application No. 11-101256, filed on April 8, 1999). These composites, although excellent in heat resistance in the presence of oxygen, tend to need high production cost, because of expensive boron carbide or the like used as an essential component, which naturally limits their applications as the common materials for those in service in a low-oxygen atmosphere, e.g., furnace members.

Summary of the Invention

This invention is made to solve the above described problems. It is an object of the present invention to provide a novel carbonaceous material, which exhibits high strength (high resistance to thermal shock) at high temperature, high reliability as a material (e.g., toughness, and resistance to impact and wear) and environmental resistance (e.g., resistance to corrosion, oxidation and radiation), as well as lightness for energy saving and easiness of handling, is produced at reasonable cost, and remains substantially unoxidized at 800°C or higher in a low-oxygen atmosphere. It is another object of the present invention to provide a method for producing the same.

The inventors of the present invention have found, after having extensively studied to solve the above described problems, that a carbonaceous material can achieve the above objective, which has an oxidation-resistant protective layer composed of silicon carbide and metallic silicon, which remains substantially unoxidized at a high temperature of 800°C or higher in a low-oxygen atmosphere, reaching the present invention. They have also found that the above objective can be achieved by a method for producing the carbonaceous material having an oxidation-resistant protective layer which remains substantially unoxidized at a high temperature of 800°C or higher in a low-oxygen atmosphere, the method being characterized in that it forms a protective layer composed of silicon carbide and metallic silicon.

Brief Description of the Drawings

Fig. 1 is a schematic perspective view of the assembly of yarns, as the basic structure for the Si-SiC-based or SiC-based composite, which serves as the base for the carbonaceous material of the present invention having the oxidation-resistant protective layer.

Figs. 2(A) and 2(B) show the sectional views taken along the lines IIa-IIa and IIb-IIb in Fig. 1, respectively.

Figs. 3(A) and 3(B) show the sectional views taken along the lines IIa-IIa and IIb-IIb in Fig. 1, respectively.

Detailed Description of Preferred Embodiment

The base material of the carbonaceous material of the present invention is produced from the stock mainly composed of carbon fibers. The carbonaceous materials used for the present invention include, first of all, carbon fibers. Any type of carbon fibers can be used for the present invention, irrespective of the method by which they are produced or stock material from which they are produced. In practical application, carbon fibers are formed into a given shape using a binder or the like. Use of the C/C composite, described below, is preferable for its durability. The composite of the C/C composite impregnated with Si is also included in the carbonaceous material useful for the present invention. The Si-SiC-based or SiC-based composite, defined and described below, is suitably used as the Si-impregnated composite. In this specification, the carbonaceous material includes carbon fibers themselves, needless to say, and any C/C composite being classified as a carbon fiber in a broader sense. It also includes the Si-SiC-based and SiC-based composites which are C/C composites impregnated with a predetermined quantity of metallic silicon and processed by a specific method. Their properties, methods by which they are produced, and the like will be described later. In this specification, the term carbonaceous material includes a C/C, Si-SiC-based and SiC-based composite, in order to avoid confusion. In other words, carbon fibers in a narrower sense, and the above described composites can be used as the base material for the present invention.

The C/C composite described in this specification means a compact or a fired compact which may be prepared in the following manner: firstly bundled carbon fibers are prepared by incorporating a powdered binder such as pitch, coke or the like which is served as a matrix for bundled carbon fibers; said binder being changed into a free carbon being present around the carbon fibers after being fired, and, as required, further powdered phenolic resin or the like. Then, a flexible film of a plastic, e.g., thermoplastic resin is formed around thus formed bundles, to prepare preformed yarn as the flexible intermediate material. The preformed yarns are formed into a sheet or woven cloth by the method disclosed by JP-A-2-80639, which are placed one on another to have a desired number of layers, and then hot-pressed or hot-pressed and then fired. Thus, the C/C composite described in this specification is characterized by being composed of a specific layered structure and matrix structure of carbon fibers and carbon other than carbon fibers, the carbon fibers comprising a specific number of carbon fiber bundles to form the layered structure, and the carbon other than carbon fibers working as the matrix to fill the voids between the layered structures.

For production of the C/C composite as the base material, several hundreds to several tens of thousands of carbon fibers, each having a diameter of around 10 μm, are bundled into a yarn; each yarn is coated with a thermoplastic resin to form a flexible, fibrous intermediate material; these yarns are formed into a sheet by the method disclosed by JP-A-2-80639; these sheets are arranged two- or three-dimensionally into a unidirectional sheet or various types of cloths; these sheets or cloths are laminated into a fiber preform of desired shape; and the coating layer of thermoplastic resin or the like over each of the fiber bundles is baked and removed after being carbonized. In this specification, the description of JP-A-2-80639 is incorporated herein by reference. A carbon component other than the carbon fibers for the C/C composite used for the present invention is preferably finely divided carbon, more preferably finely divided graphite.

The Si-SiC-based composite for the present invention is composed of 55 to 75 wt.% of carbon, 1 to 10 wt. % of silicon and 10 to 50 wt.% of silicon carbide. It comprises assembly of yarns and matrix of the Si-SiC-based material, and has a dynamic friction coefficient of 0.05 to 0.6 and porosity controlled at 0.5 to 10%, wherein the assembly of yarns comprises yarns containing at least carbon fiber bundles and carbon component other than the carbon fibers, and being oriented in the layer direction and three-dimensionally combined with, and bound to, each other to form a monolithic body, with the space between the yarns being filled with the matrix. It can be produced by the method disclosed by PCT/JP 98/04523 filed on October 7, 1998. The description of the above patent application is incorporated herein by reference.

The Si-SiC-based material, as described in this specification, is typically composed of silicon and silicon carbide phases, containing several different phases from a silicon phase composed of silicon remaining unreacted to a silicon carbide phase almost composed of pure silicon carbide, wherein the silicon carbide phase can contain an SiC coexisting phase in which silicon is present at gradient contents. Therefore, the Si-SiC-based material is a generic term for the systems in which carbon is present at a content in a range from 0 to 50 mol%. The Si-SiC-based composite material for the present invention has the matrix of the Si-SiC-based material.

The Si-SiC-based composite material preferably has a matrix of gradient silicon content, in which silicon content increases as distance from the yarn surface increases. In the Si-SiC-based composite material, the assembly of yarns of carbon fibers is preferably composed of two or more yarn array elements placed one on another, each element being composed of yarns arranged two-dimensionally to run in parallel to each other, wherein each yarn is a bundle of specific number of carbon fibers. Therefore, the Si-SiC-based composite material has a laminated structure with two or more layers of the yarn array elements laminated in a specific direction.

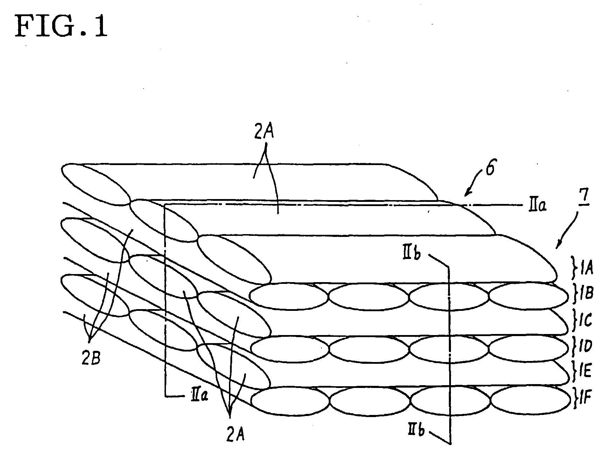

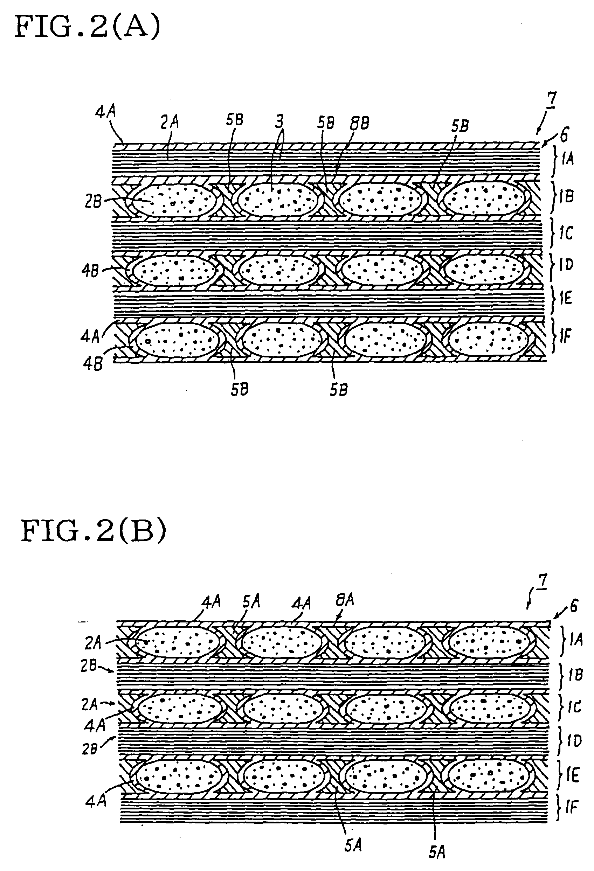

Fig. 1 shows a perspective view that explains concept of the assembly of yarns, and Figs. 2(A) and 2(B) show the views of sections cut along the lines IIa-IIa and IIb-IIb in Fig. 1, respectively. The Si-SiC-based composite material 7 is structurally formed by the assembly of yarns 6, which is composed of the yarn array elements 1A, 1B, 1C, 1D, 1E and 1F laminated in the vertical direction. Each yarn array element is composed of the yarns 3 arranged two-dimensionally, almost in parallel to each other in the longitudinal direction. The longitudinal directions of the yarns in a yarn array element is at a right angle to those of the yarns in the yarn array elements one above and below. More particularly, the longitudinal directions of the yarns 2A for each of the yarn array elements 1A, 1C and 1E are in parallel to each other and perpendicular to the directions of the yarns 2B for each of the yarn array elements 1B, 1D and 1F. Each yarn is composed of a fiber bundle 3 comprising carbon fibers and a carbon component other than the carbon fibers. The yarn array elements are laminated to form the assembly of yarns 6 of three-dimensional lattice structure. Each yarn is pressed in the pressing process, to have an substantially elliptic section, as described later.

In each of the yarn array elements 1A, 1C and 1E, the space between adjacent yarns is filled with a matrix 8A, which extends along the yarn 2A surface. Similarly, in each of the yarn array elements 1B, 1D and 1F, the space between adjacent yarns is filled with a matrix 8B, which extends along the yarn 2B surface. In this example, each of the matrices 8A and 8B is composed of the respective silicon carbide phases 4A and 4B covering each yarn surface, and respective Si-SiC-based material phases 5A and 5B, containing carbon at a lower content. The silicon carbide phase may contain silicon to some extent. There are the silicon carbide phases 4A and 4B formed between the vertically arranged yarns 2A and 2B in this example.

Each of the matrices 8A and 8B extends long and narrowly along each yarn surface, preferably straightly. The matrices 8A and 8B are perpendicular to each other. The matrix 8A for each of the yarn array elements 1A, 1C and 1E is connected to the matrix 8B for each of the yarn array elements 1B, 1D and 1F at the respective space between the yarns 2A and 2B, with the result that the matrices 8A and 8B together form a three-dimensional lattice structure as a whole.

The SiC-based composite material, or SiC-C/C composite material, for the present invention is composed of silicon carbide, carbon fibers and a carbon component other than the carbon fibers, and matrices formed in and around the skeleton. At least 50% of the silicon carbide is that of $\beta$ type. Its skeleton is mainly composed of the carbon fibers and a carbon component other than the carbon fibers, and may contain silicon carbide to some extent. The matrix is composed of silicon carbide, and combined integrally with the skeleton. The composite material is also characterized by porosity of 0.5 to 5%, and two-peak type average pore size distribution.

The SiC-based composite comprises the C/C composite as the skeleton, which is composed of bundled carbon fibers. Therefore, each carbon fiber constituting the composite retains the carbon fiber structure intact, even when SiC is partly formed therein. As a result, the SiC-based composite has a significant advantage of the inherent mechanical strength of the C/C composite almost retained intact or even enhanced in the presence of SiC, because the carbon fibers will not become short fibers even when they are partly transformed into SiC. Moreover, it has a composite structure with the matrix of the SiC-based material formed between the adjacent yarns in the assembly of yarns. This differentiates the SiC-based composite from the Si-SiC-based composite. The SiC-based composite can be produced by the method disclosed by Japanese Patent Application No. 11-31979 (filed on February 9, 1999). The description of the above patent application is incorporated herein by reference.

The SiC-based composite for the present invention means a material which contains silicon carbide having varying degree of bonding to carbon. In production of the SiC-based composite, the C/C composite is impregnated with metallic silicon, which reacts with the carbon atoms constituting the carbon fibers in the composite and/or with the free carbon atoms remaining on the carbon fiber surfaces, to be partly carbonized. As a result, partly carbonized silicon is formed on the outermost surfaces of the C/C composite and between the yarns of the carbon fibers. Thus, the matrix of silicon carbide is formed between the yarns.

The matrix can contain several different SiC phases, from the one in which trace quantities of silicon and carbon bond to each other to the one in which silicon carbide is totally crystallized. However, the matrix can contain metallic silicon only to an extent of detectable limit by X-ray (0.3 wt.%) or less. In other words, the matrix is typically composed of the silicon carbide phase, which can contain an SiC phase with silicon present at gradient content. Therefore, the SiC-based material is a generic term for the systems in which carbon is present at a content in a range from 0.01 to 50 mol%. It is not practical to control carbon content at below 0.01 mol%, because quantity of metallic silicon must be controlled more strictly in consideration of free carbon present in the C/C composite, and more sophisticated temperature control is required. Theoretically, it is possible to control carbon content to the order of 0.001 mol%, though.

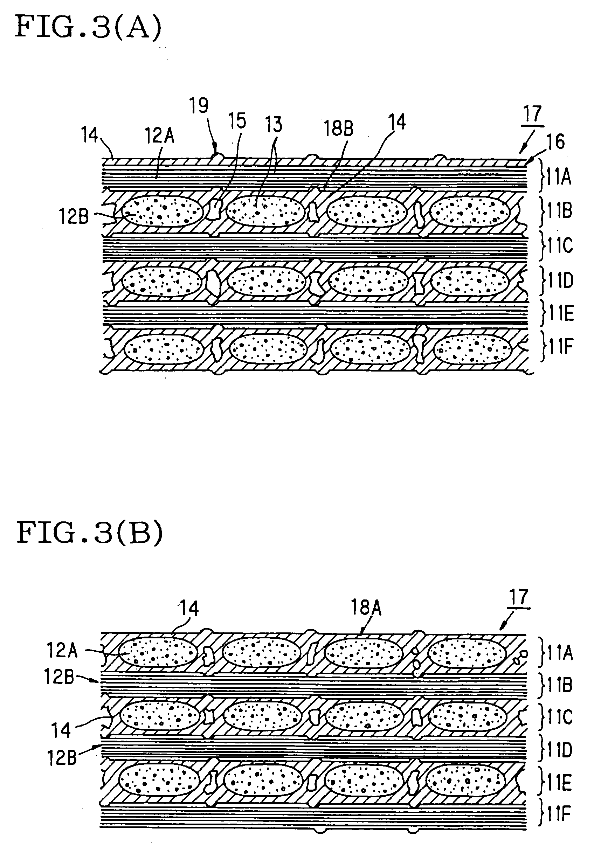

The Si-based composite material is described more particularly by referring to the attached drawings. The skeleton of the SiC-based composite is basically the same as the one shown in Fig. 1. Figs. 3(A) and 3(B) show the sectional views taken along the lines IIa-IIa and IIb-IIb in Fig. 1, respectively.

The SiC-based composite material 17 is structurally formed by the assembly of yarns 16, as is the case with the Si-SiC-based composite material 7. The assembly of yarns 16 is composed of the yarn array elements 11A, 11B, 11C, 11D, 11E and 11F laminated in the vertical direction. Each yarn array element is composed of the yarns 13 arranged two-dimensionally, almost in parallel to each other in the longitudinal direction. The longitudinal directions of the yarns in a yarn array element is at a right angle to those of the yarns in the yarn array elements one above and below. More particularly, the longitudinal directions of the yarns 12A for each of the yarn array elements 11A, 11C and 11E are in parallel to each other and perpendicular to the longitudinal directions of the yarns 12B for each of the yarn array elements 11B, 11D and 11F. Each yarn is composed of a fiber bundle 13 comprising carbon fibers and a carbon component other than the carbon fibers. The yarn array elements are laminated to form the assembly of yarns 16 of three-dimensional lattice structure. Each yarn is pressed during the pressing process, to have an almost elliptic section, as described later.

In each of the yarn array elements 11A, 11C and 11E, the space between adjacent yarns is filled with a matrix 18A. which extends along the yarn 12A surface. Similarly, in each of the yarn array elements 11B, 11D and 11F, the space between adjacent yarns is filled with a matrix 8B, which extends along the yarn 12B surface. As shown in Figs. 3(A) and 3(B), each of the matrices 18A and 18B is composed of the respective silicon carbide phases 14 covering each yarn surface. The silicon carbide phase may partly protrude from the surface as small projections 19, or into the carbon fiber layers within the composite material. Each of these projections 19 contains pores (voids 15) having a median pore diameter of around 100 μm. Most of these projections 19 are formed along the traces left by the carbon component, other than the carbon fibers, that constitute the stock C/C composite. It is therefore possible to control density of these projections 19 per unit area by adequately selecting distance between the yarns, and/or between the yarn array elements. The silicon carbide phase 14 may be formed also between the adjacent yarns 12A and 12B.

Each of the matrices 18A and 18B extends long and narrowly along each yarn surface, preferably straightly. The matrices 18A and 18B are perpendicular to each other. The matrix 18A for each of the yarn array elements 11A, 11C and 11E is connected to the matrix 18B, at a right angle to the matrix 18A, for each of the yarn array elements 11B, 11D and 11F at the respective space between the yarns 12A and 12B, with the result that the matrices 18A and 18B form a three-dimensional lattice structure as a whole.

Next, the carbonaceous material of the present invention is described. It has an oxidation-resistant protective layer composed of silicon carbide and metallic silicon, which remains substantially unoxidized at a high temperature of 800°C or higher in a low-oxygen atmosphere. The carbonaceous material of the present invention is composed of a carbonaceous material which is formed into a desired shape, e.g., cubic, columnar or trigonal, depending upon a required use, and on which an oxidation-resistant protective layer composed of silicon carbide and metallic silicon is formed, which remains substantially unoxidized at a high temperature of 800°C or higher in a low-oxygen atmosphere. To remain substantially unoxidized means that the sample loses or gains weight of 0.5% or less, when exposed to a given high temperature (e.g., 800°C) in a predetermined atmosphere (e.g.. an argon atmosphere containing steam at 3%) for at least 24 hours.

The oxidation-resistant protective layer composed of silicon carbide and metallic silicon may be formed by winding carbon paper, impregnated with a slurry of metallic silicon and a phenolic resin, around a carbonaceous material (e.g., C/C composite), calcining it at 1000°C or lower in an inert atmosphere to carbonize the phenolic resin, and then heating it at 1420 to 2200°C in the same atmosphere, to react metallic silicon with substantially all of the carbon in the above temperature range. The sheet to be wound around the carbonaceous material is at least 10 μm thick, preferably 100 to 300 μm thick. Thickness of the carbon paper varies depending on purposes of the carbonaceous material of the present invention. When a protective Si-SiC layer is to be formed, the carbon paper should be sufficiently thick to give the protective layer having a final thickness of around 100 to 300 μm, which is required to keep the layer substantially unoxidized at a high temperature of 800°C or higher in a low-oxygen atmosphere. The carbonaceous material may not be necessarily coated with the protective layer over the entire surface, but may be partly exposed depending on purposes or service types. For example, when it is columnar with a sufficient height, it may be left uncoated at both ends.

The carbon paper is not limited to particular types, so long as it can be impregnated with a slurry of metallic silicon and phenolic resin. A carbon paper which can be highly impregnated with the slurry and has a porosity of around 90 to 95% is suitably used. Metallic silicon is preferably contained in the slurry to a quantity sufficient to transform all of the carbon formed as a result of carbonization of the phenolic resin and at least 10%, preferably 50% or more, of the carbon which constitutes the carbon paper into silicon carbide. The slurry of metallic silicon and phenolic resin may be prepared by the common method, and should contain metallic silicon at a content sufficient to transform it into silicon carbide, preferably in a range from 25 to 75 g/v%. Care must be taken, needless to say, to keep the slurry sufficiently fluid to impregnate the carbon paper therewith. The slurry may be incorporated with an adequate aid, e.g., organic solvent, to adjust its fluidity.

Thus, the carbonaceous material of the present invention having an oxidation-resistant protective layer, which remains substantially unoxidized at a high temperature of 800°C or higher in a low-oxygen atmosphere, comprises the carbonaceous base material keeping intact its desired properties (e.g., high shock resistance, low thermal expansion coefficient and lightness) and oxidation-resistant protective layer thereon which is composed of durable silicon carbide and metallic silicon. As such, it shows high resistance to oxidation in the air, scarcely produces fine particle when exposed to mechanical actions, e.g., wear, and hence can be very suitably used as a material for various furnace tools.

Examples

Now, preferred embodiments of the present invention will be described more particularly with reference to examples. It is to be understood that the present invention is not limited by these examples, and modifications may be made without departing from the spirit and scope of the invention. Characteristics related to oxidation resistance were determined by the following methods:

Preliminary test for oxidation resistance

The sample was heated in the air to 800°C, at which it was held for 5 min, and its weight was measured. Weight loss $W_2$ is defined below:

$$W_2 = (W_0 - W_1)/W_0 \times 100$$

where, $W_0$ and $W_1$ are sample weight before and after the oxidation resistance test, and $W_2$ is weight loss.

Oxidation resistance test

The sample was heated in the air to 800°C, at which it was held for a given time, and its weight was measured. Weight gain or loss $W_2$ is defined below:

$$W_2 = (W_0 - W_1)/W_0 \times 100$$

where, $W_0$ and $W_1$ are sample weight before and after the oxidation resistance test, and $W_2$ is weight gain or loss(the sign "-" before $W_2$ means that the sample lost its weight by the oxidation test).

Production examples

(1) Production of Si-SiC-based composite

Approximately 10,000 long carbon fibers (diameter: 10 μm), oriented in one direction and impregnated with a phenolic resin, were bundled into a yarn, and the yarns were formed into screen-shaped yarn array elements (prepreg sheet). These prepreg sheets were arranged in such a way to form a laminated assembly, as shown in Fig. 1. A carbon-based adhesive was spread over the prepreg sheet assembly, to adhere the yarns to each other. Then, the assembly was released from the mold, and heated at 180°C in a furnace to harden the phenolic resin, with which the carbon fibers were impregnated, at normal pressure, and then fired at 2000°C in a nitrogen atmosphere. Si powder (purity: 99.9%, average diameter: 10 μm) was spread over the carbon composite reinforced with carbon fibers thus prepared. The composite was then was heated at 1300°C and 1 hPa for 4 hours in the furnace in a flow of argon gas at 20 NL/min. Furnace temperature was then raised to 1600°C while the pressure was kept unchanged at the same level, to impregnate the composite with Si. This resulted in the Si-SiC-based composite composed of Si, Si-C and carbon fibers. The fired composite was cut and the outer surfaces were processed to have the sample, 9 mm by 9 mm by 9 mm in size.

(2) Formation of the oxidation-resistant protective layer

Carbon paper was impregnated with a slurry of 100 kg of metallic silicon powder (ELMEM, purity: 99.5%, average diameter: 5 μm or less) and 100 kg of a phenolic resin, which were mixed with each other in an inert atmosphere, and tightly wound around the sample prepared as, 9 mm by 9 mm by 9 mm in size. The coated sample was air-dried, and heated slowly in a furnace in an argon atmosphere to about 1000°C, at which it was held for about 3 hours, to completely carbonize the phenolic resin. On completion of the carbonization process, furnace temperature was slowly raised to about 2000°C. at which the sample was held for 3 hours, to completely react the metallic silicon with carbon, leaving essentially no unreacted metallic silicon.

The sample thus prepared was tested for its oxidation resistance (preliminary test). The Si-SiC-based composite of the same size was also tested under the same conditions, for comparison. It was found that the sample having the oxidation-resistant protective layer, i.e., the carbonaceous material of the present invention formed on it, lost essentially no weight. By contrast, the uncoated Si-SiC-based composite lost approximately 33% of its original weight.

The sample of the carbonaceous material of the present invention, i.e., that had the oxidation-resistant protective layer, was tested for its oxidation resistance under severe conditions, where it was held in a chamber at 1000°C for 50 hours in an argon gas atmosphere containing steam at 3%. Its weight was measured before and after the test, to determine weight loss (or gain) $W_2$ by the above described formula. The Si-C.C.-based composite was also tested under the same conditions, for comparison. The sample having the oxidation-resistant protective layer formed on it lost weight to a limited extent of 3.5%, whereas the sample of Si-C.C.-based composite lost as much as 68% of its original weight.

As described above, the sample having the oxidation-resistant protective layer, composed of silicon carbide and metallic silicon, remained substantially unchanged with respect to weight and outer appearances, even when exposed to a high temperature of 800°C or higher in the so-called low-oxygen atmosphere.

It is apparent from the test results above, that the carbonaceous material of the present invention, having an oxidation-resistant protective layer formed on it, shows high strength at a high temperature (high resistance to thermal shock), high reliability as a material (e.g., toughness, and resistance to impact and wear), and environmental resistance (e.g., resistance to corrosion, oxidation and radiation). It is also apparent that the carbonaceous material of the present invention is light and easy to handle, because it comprises, as the base material, the C/C composite. Si-SiC-based composite, which is the C/C composite impregnated with metallic silicon, or SiC-based composite. These properties, combined with the excellent characteristics at high temperature, make the carbonaceous material of the present invention suitable for various areas, e.g., setters used for manufacture of various furnace tools.

A new carbonaceous material having excellent properties such as a high anti-thermal shock resistance at a high temperature, high reliability and high environmental resistance in addition to lightness for energy saving and easiness of handling, being substantially not oxidized at 800°C or higher in a low-oxygen atmosphere; said carbonaceous material having the oxidation-resistant protective layer composed of silicon carbide and metallic silicon, which remains substantially unoxidized at 800°C or higher in a low-oxygen atmosphere; and obtainable by winding carbon paper around the carbonaceous material, impregnating the resultant with a slurry of metallic silicon and a phenolic resin, firing the resultant at 1000°C or lower in an inert atmosphere to carbonize the phenolic resin, and then heating the resultant at 1420 to 2200°C in the same atmosphere, to react substantially all of metallic silicon with the carbon in the above temperature range.

**Claims**

1.  A carbonaceous material having an oxidation-resistant protective layer, composed of silicon carbide and metallic silicon, which remains substantially unoxidized at a high temperature of 800°C or higher in a low-oxygen atmosphere.

2.  The carbonaceous material according to Claim 1, wherein the carbonaceous material is a C/C composite, Si-SiC-based composite or SiC-based composite.

3.  A method for producing a carbonaceous material having an oxidation-resistant protective layer, which remains substantially unoxidized at a high temperature of 800°C or higher in a low-oxygen atmosphere, wherein an oxidation-resistant protective layer composed of silicon carbide and metallic silicon is formed by winding carbon paper around a carbonaceous material having a predetermined form, impregnating the resultant with a slurry of metallic silicon and a phenolic resin, firing the resultant at 1000°C or lower in an inert atmosphere to carbonize the phenolic resin, and then heating it at 1420 to 2200°C in the same atmosphere, to react metallic silicon with substantially all of the carbon in the above temperature range.

4.  The method for producing a carbonaceous material according to Claim 3, wherein said oxidation-resistant protective layer is 100 to 300 μm thick.

FIG.1

# FIG.2(A)

# FIG.2(B)

# FIG.3(A)

# FIG.3(B)